# EUROPÄISCHE PATENTSCHRIFT

(11) **EP 3 213 041 B1**
(45) Veröffentlichungstag und Bekanntmachung des Hinweises auf die Patenterteilung: **22.06.2022**
(21) Anmeldenummer: 15756664.7
(22) Anmeldetag: 02.09.2015
(51) Int. Cl.: G01F 23/296, G01N 29/22, G01N 11/16, G01N 29/07, G01N 29/02, G01N 29/46, G01N 9/00

(54) **VIBRONISCHER SENSOR**
VIBRONIC SENSOR
CAPTEUR VIBRONIQUE

(30) Priorität: 29.10.2014 DE 102014115693
(43) Veröffentlichungstag der Anmeldung: 06.09.2017
(73) Patentinhaber: Endress+Hauser SE+Co. KG, 79689 Maulburg (DE)
(72) Erfinder: KUHNEN, Raphael, D-79418 Schliengen (DE); HENKEL, Ira, 79664 Wehr (DE); WIMBERGER, Peter, D-79650 Schopfheim (DE)
(74) Vertreter: Andres, Angelika Maria
(86) Internationale Anmeldenummer: PCT/EP2015/070029
(87) Internationale Veröffentlichungsnummer: WO 2016/066305

(56) Entgegenhaltungen:
- DE-A1- 4 203 967
- DE-A1- 10 242 970
- ROGER ORIA ET AL: "Finite Element Analysis of Electrically Excited Quartz Tuning Fork Devices", SENSORS, Bd. 13, Nr. 6, 30. Mai 2013 (2013-05-30), Seiten 7156-7169, XP055224020, DOI: 10.3390/s130607156

## Beschreibung

Die Erfindung betrifft eine Vorrichtung und ein Verfahren zur Überwachung mindestens einer Prozessgröße eines Mediums mit zumindest einer schwingfähigen Einheit umfassend eine Membran und ein Schwingelement.

Derartige auch als vibronische Sensoren bezeichnete Vorrichtungen werden als Füllstandsmessgeräte eingesetzt und weisen häufig als schwingfähige Einheit eine Schwinggabel auf. Aber auch Varianten mit einem Einstab oder einer Membran sind bekannt geworden. Die schwingfähige Einheit wird im Betrieb mittels einer elektromechanischen Wandlereinheit zu mechanischen Schwingungen angeregt, welche wiederum beispielsweise durch einen piezoelektrischen Antrieb oder einen elektromagnetischen Antrieb gegeben sein kann.

Es versteht sich von selbst, dass es neben den genannten Beispielen auch weitere Möglichkeiten gibt, welche ebenfalls unter die vorliegende Erfindung fallen.

Entsprechende Feldgeräte werden von der Anmelderin in großer Vielfalt hergestellt und im Falle von Füllstandsmessgeräten beispielsweise unter der Bezeichnung LIQUIPHANT und/oder SOLIPHANT vertrieben. Die zugrundeliegenden Messprinzipien sind aus einer Vielzahl von Veröffentlichungen bekannt. Die Anregung der schwingfähigen Einheit kann sowohl mittels analoger als auch digitaler Verfahren durchgeführt werden und erfolgt zumeist über einen analogen elektrischen Schwingkreis. Die elektromechanische Wandlereinheit regt die schwingfähige Einheit mittels eines elektrischen Anregesignals zu mechanischen Schwingungen an und empfängt die Schwingungen und wandelt sie in ein elektrisches Empfangssignal um. Die elektromechanische Wandlereinheit umfasst entsprechend entweder eine separate Antriebs- und Empfangseinheit oder eine kombinierte Antriebs-/Empfangseinheit.

Dabei ist die Antriebs-/Empfangseinheit Teil eines in einer Elektronikeinheit integrierten Regelkreises, welcher das Anregesignal im Normalfall derart einstellt, dass zwischen dem Anregesignal und Empfangssignal eine vorgebbare Phasenverschiebung vorliegt. Beispielsweise muss für eine resonante Schwingung die Schwingkreisbedingung, gemäß welcher alle im Schwingkreis auftretenden Phasen ein Vielfaches von 360° ergeben, erfüllt sein.

Sowohl das Anregesignal als auch das Empfangssignal sind charakterisiert durch ihre Frequenz, Amplitude und/oder Phase. Deshalb werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei anhand unterschiedlicher Resonanzfrequenzen, also einer Frequenzverschiebung, unterschieden. Die Dichte und/oder Viskosität wiederum lassen sich mit einem derartigen Messgerät nur bei einer zumindest teilweisen Bedeckung mit dem Medium ermitteln.

Als Anregesignal werden üblicherweise Sinus- oder Rechtecksignale verwendet. Der Vorteil eines Sinussignals ist dadurch gegeben, dass keine bzw. wenige Obertöne, das sind ganzzahlige Vielfache des Anregesignals, auf die schwingfähige Einheit übertragen werden. Auf diese Weise wird die zur Verfügung stehende Schwingungsenergie vorteilhaft im Wesentlichen für nur eine Schwingungsmode verwendet. In Bezug auf die Signalerzeugung innerhalb der Elektronikeinheit ist dies aber vergleichsweise aufwendig und mit einer vergleichsweise höheren Leistungsaufnahme des Messgeräts verbunden. Deshalb wird der Einfachheit halber im Allgemeinen zur Anregung ein Rechtecksignal verwendet. Das ermöglicht insbesondere, dass vibronische Messgeräte über 4-20mA- oder NAMUR- Schnittstellen betrieben werden können.

Ein Nachteil bei der Verwendung von Rechtecksignalen liegt aber wiederum darin, dass neben der Anregefrequenz auch Obertöne auf die schwingfähige Einheit übertragen werden. Als Folge kann es zu einer erheblichen Geräuschemission der schwingfähigen Einheit kommen.

Für die Mehrheit aller Anwendungen ist die gewünschte Schwingungsmode gegeben durch die Grundschwingungsmode, welche durch eine Anregung mit der Grundresonanzfrequenz angeregt wird. Aber auch Anwendungen, bei welchen die Torsionsmode angeregt wird, sind bekannt geworden.

Vorrichtungen zur Bestimmung bzw. Überwachung von Prozessgrößen eines Mediums in einem Behälter mittels einer schwingfähigen Einheit sind u. a. aus DE 102 42 970 A1 und DE 42 03 967 A1 bekannt. Roger Oria et al. führten eine Studie zur Simulation des Verhaltens von Schwinggabelsensoren mittels finiter Elemente durch. Siehe "Finite Element Analysis of Electrically Excited Quartz Tuning Fork Devices", SENSORS, Band 13, Nr. 6, vom 30. Mai 2013 (Seiten 7156-7169).

Der vorliegenden Erfindung liegt die Aufgabe zugrunde, eine schwingfähige Einheit sowie ein Verfahren zu deren Herstellung für einen vibronischen Sensor bereitzustellen, welcher sich durch eine geringe Geräuschemission auszeichnet, insbesondere bei der Anregung mit einem Rechtecksignal.

Diese Aufgabe wird erfindungsgemäß gelöst durch Z eine in Anspruch 1 definierte Vorrichtung. Es handelt sich dabei um Z eine Vorrichtung zur Bestimmung und/oder Überwachung mindestens einer Prozessgröße eines Mediums in einem Behälter mit zumindest einer schwingfähigen Einheit, umfassend zumindest eine Membran, und zumindest ein Schwingelement, mit einer Antriebs-/Empfangseinheit, welche dazu ausgestaltet ist, die mechanisch schwingfähige Einheit mittels eines elektrischen Anregesignals einstellbarer Anregefrequenz zu Schwingungen im der Anregefrequenz entsprechenden Schwingungsmodus anzuregen und die mechanischen Schwingungen von der schwingfähigen Einheit zu empfangen und in ein elektrisches Empfangssignal umzuwandeln, wobei es sich bei dem Schwingungsmodus um eine Grundschwingungsmode und bei der Anregefrequenz um die der Grundschwingungsmode entsprechende Grundresonanzfrequenz handelt, und mit einer Elektronikeinheit, welche dazu ausgestaltet ist, ausgehend vom Empfangssignal das Anregesignal zu erzeugen, und aus dem Empfangssignal die zumindest eine Prozessgröße zu ermitteln, wobei die Membran mit der Antriebs-/Empfangseinheit verbunden ist, wobei das Schwingelement die Form eines Schwingstabes aufweist, an welchem endseitig ein Paddel angeformt ist, und welches Schwingelement im dem Paddel abgewandten Endbereich an der Membran befestigt ist, und wobei die Massenverteilung, Steifigkeit und Geometrie der schwingfähigen Einheit derart gewählt sind, dass die Frequenz zumindest einer in Bezug auf die Grundschwingungsmode höheren Schwingungsmode der schwingfähigen Einheit im Bereich zwischen zwei benachbarten ganzzahligen Vielfachen der Grundresonanzfrequenz liegt.

Dass diese Maßnahme die Geräuschemission deutlich reduziert, liegt an folgendem Zusammenhang: Insbesondere bei einer Anregung mit einem Rechtecksignal wird eine Vielzahl von Obertönen auf die schwingfähige Einheit übertragen. Entsprechen die Frequenzen der Obertöne im Anregesignal einer Frequenz zur Anregung einer höheren Schwingungsmode der schwingfähigen Einheit, so überlagern sich mehrere Schwingungsmoden anstelle einer ausschließlichen Schwingung in der gewünschten Schwingungsmode. Dies führt dann zu der erhöhten Geräuschemission. Es ist also vorteilhaft, wenn die Grundresonanzfrequenz der schwingfähigen Einheit, sowie die mit dieser in Relation stehenden höheren Harmonischen, das sind die Frequenzen, mit welchen die höheren Schwingungsmoden angeregt werden, nicht den Obertönen des Anregesignals entsprechen.

Ganz allgemein hängt die Resonanzfrequenz eines mechanischen Schwingungssystems von dessen Steifigkeit und Masseverteilung ab. Je geringer die Steifigkeit, desto geringer ist die Schwingfrequenz bei konstanter Masse. Somit kann durch eine geschickte Wahl der Masseverteilung, Steifigkeit und/oder Geometrie das Schwingungsspektrum der schwingfähigen Einheit gezielt verändert und entsprechend der jeweiligen Anwendung optimiert werden. Insbesondere kann vorteilhaft erreicht werden, dass höhere Schwingungsmoden nicht auf Frequenzen entsprechend den Obertönen der jeweiligen Anregefrequenz fallen.

In einer besonders bevorzugten Ausgestaltung ist die schwingfähige Einheit eine Schwinggabel. Diese Ausgestaltung für die schwingfähige Einheit eines vibronischen Sensors ist die am häufigsten verwendete Geometrie. Dies liegt an den speziellen Schwingungseigenschaften, welche eine Stimmgabel aufgrund ihrer Geometrie aufweist.

Es ist von Vorteil, wenn das Paddel aus einem vorgebbaren Material mit einer Dichte (p) besteht, mit einer vorgebbaren Oberfläche (A_{P}) und einer vorgebbaren Dicke (d), und dass das Produkt aus Dicke (d) und Dichte (p) möglichst klein ist, und dass die Oberfläche (A_{P}) des Paddels möglichst groß ist. Durch diese Bedingung kann die Messgenauigkeit der schwingfähigen deutlich erhöht werden, wie in der DE102005062001A1 beschrieben.

Ebenfalls ist es von Vorteil, wenn die Oberfläche (A_{P}) des Paddels und/oder des Schwingstabes (A_{S}) gewölbt sind. Dies vereinfacht es, das Paddel zu bearbeiten, insbesondere zu polieren.

In einer bevorzugten Ausgestaltung sind die Kanten des Paddels abgerundet. Dabei ist es insbesondere von Vorteil, wenn die Breite des Paddels (b) im mittleren Bereich bezogen auf die Längsachse (L) parallel zum Schwingstab am größten ist, und wobei das Paddel im Endbereich auf der der Membran abgewandten Seite unter einem Winkel zwischen 20° und 55° zur Längsachse des Paddels abgeschrägt ist. Paddel, welche an den Kanten, insbesondere im Endbereich, abgeschrägt sind, zeichnen sich in Bezug auf die Abtropfeigenschaften der schwingfähigen Einheit vorteilhaft aus, insbesondere im Falle anhaftender Medien, wie in der EP1373840B1 beschrieben.

In einer anderen Variante kann das Paddel auch mit einer Spitze abschließen. Diese Geometrie ist zwar in Bezug auf die Abtropfeigenschaften der Schwinggabel am vorteilhaftesten. Jedoch sinkt auf der anderen Seite mit abnehmender Fläche im Endbereich der Paddel die Sensitivität der Schwinggabel, da sich der Schaltpunkt für die Detektion des Überschreitens eines Grenzstandes eines Mediums ändert. Der Schaltpunkt ist definiert durch eine bestimmte einstellbare Frequenzverschiebung, welche einer bestimmten Eintauchtiefe der Schwinggabel in das Medium entspricht. Im Falle des herkömmlichen LIQUIPHANT liegt der Schaltpunkt beispielsweise ca. 13mm oberhalb des Endbereichs der beiden Paddel.

Somit ist es vorteilhaft, je nach Anwendung zu entscheiden, welche Geometrie die meisten Vorteile bringt, und abzuwägen, ob das Abtropfverhalten eine bedeutende Rolle für die jeweilige Anwendung spielt.

In einer weiteren bevorzugten Ausgestaltung weist der Schwingstab des Schwingelements eine runde Querschnittsfläche senkrecht zur Längsachse (L) auf. Die ideale Ankopplung des mindestens einen Schwingelements an die Membran ist punktförmig. Diese Geometrie ist allerdings technisch nicht realisierbar. Eine runde Querschnittsfläche bietet in dieser Hinsicht den besten Kompromiss.

In einer weiteren Ausgestaltung ist die Dicke des Paddels im Endbereich geringer als im mittleren Bereich. Auch diese Maßnahme erhöht die Messempfindlichkeit der Schwinggabel.

In einer bevorzugten Ausgestaltung ist die zumindest eine Prozessgröße gegeben durch einen vorbestimmten Füllstand des Mediums, oder durch die Dichte des Mediums oder durch die Viskosität des Mediums.

In einer weiteren bevorzugten Ausgestaltung ist die schwingfähige Einheit aus einem Metall, einer Keramik oder einem Kunststoff gefertigt. Es versteht sich von selbst, dass auch andere Materialien unter die Erfindung fallen, sowie, dass die Schwinggabel mit einer Beschichtung versehen sein kann.

Die erfindungsgemäße Aufgabe wird weiterhin gelöst durch ein Verfahren gemäß Anspruch 12. Es handelt sich um ein Verfahren zur Herstellung einer erfindungsgemäßen schwingfähigen Einheit, wobei zur Einstellung der Lage der Frequenz mindestens einer in Bezug auf die der Anregefrequenz entsprechenden Schwingungsmode höheren Schwingungsmode der mechanisch schwingfähigen Einheit die Massenverteilung, Steifigkeit und/oder Geometrie der schwingfähigen Einheit mittels einer Finite-Elemente Methode variiert wird, so dass die Frequenz der höheren Schwingungsmode im Bereich zwischen zwei benachbarten ganzzahligen Vielfachen der Anregefrequenz liegt. Die Masseverteilung, Steifigkeit und/oder Geometrie der schwingfähigen Einheit werden also so lange variiert, bis die zumindest eine in Bezug auf die der Anregefrequenz entsprechenden Schwingungsmode höhere Schwingungsmode der schwingfähigen Einheit nicht mehr durch die Obertöne der Anregefrequenz angeregt werden. Die Finite-Elemente Methode stellt ein numerisches Verfahren zur Lösung partieller Differentialgleichungen dar.

Bei dem Verfahren zur Herstellung der schwingfähigen Einheit ist es von Vorteil, wenn zur Einstellung der Lage der ersten höheren Schwingungsmode die Masseverteilung im mittleren Bereich des Paddels variiert wird. Ebenso ist es von Vorteil, wenn zur Einstellung der Lage einer höheren Schwingungsmode, insbesondere der zweiten höheren Schwingungsmode, die Steifigkeit im Bereich der Membran und der Verbindung zwischen Membran und Schwingstab variiert wird. Der Grund hierfür ist gegeben durch die spezifischen Schwingungsbewegungen, welche die schwingfähige Einheit in der jeweiligen Schwingungsmode ausführt. Dies sei im Folgenden am Beispiel eines Biegeschwingers in Form eines einseitig eingespannten Stabes, wie es auch bei einer Schwinggabel der Fall ist, erläutert. Wird der Biegeschwinger mit der Grundschwingungsfrequenz angeregt, so führt er Schwingungen in der Grundschwingungsmode aus. Dabei schwingt der Stab mit einer Auslenkungsamplitude, welche auf der der eingespannten Seite des Stabes gegenüberliegenden Seite am größten ist, während sich auf der eingespannten Seite ein Schwingungsknoten ausbildet. Wird der Biegeschwinger mit Frequenzen entsprechend den höheren Schwingungsmoden angeregt, so wächst mit jeder Schwingungsmode die Anzahl der Schwingungsknoten auf dem Stab pro Schwingungsmode um mindestens einen. Entsprechend tritt für die erste angeregte Schwingungsmode im mittleren Bereich des Biegeschwingers ein weiterer Schwingungsknoten auf usw. Die Lage der Schwingungsknoten in der jeweiligen Schwingungsmode gibt also einen Hinweis darauf, wie bzw. wo die Masseverteilung, Steifigkeit und/oder Geometrie der schwingfähigen Einheit am besten variiert werden sollte. Die Einbeziehung der spezifischen Schwingungsbewegung in einer bestimmten Schwingungsmode erleichtert damit den Rechenaufwand zum Auffinden der idealen Masseverteilung, Steifigkeit und/oder Geometrie erheblich.

Die Erfindung sowie ihre vorteilhaften Ausgestaltungen werden nachfolgend anhand der Figuren Fig. 1 - Fig. 5 näher beschrieben. Es zeigt:
Fig. 1: eine schematische Skizze eines vibronischen Sensors gemäß Stand der Technik,
Fig. 2: eine schematische Skizze (a) einer Schwinggabel sowie (b) der Bewegungen einer Schwinggabel in der Grundschwingungsmode sowie in den ersten beiden angeregten Schwingungsmoden.
Fig. 3: (a) das Schwingungsspektrum der Schwinggabel eines LIQUIPHANT im Vergleich mit dem Schwingungsspektrum einer erfindungsgemäßen Schwinggabel, und (b) die zugehörigen akustischen Spektren.
Fig. 4 a-b: einen Vergleich der Geometrien der Schwinggabel eines LIQUIPHANT und einer erfindungsgemäßen Schwinggabel, zugehörig zu den Spektren in Fig. 3
Fig. 5: (a) eine Seitenansicht der erfindungsgemäßen Schwinggabel aus Fig. 4, (b) eine zweite Variante einer erfindungsgemäßen Schwinggabel mit einem im Endbereich abgerundeten Paddel, und (c) eine dritte Variante einer erfindungsgemäßen Schwinggabel mit einem mit einer Spitze abschließenden Paddel

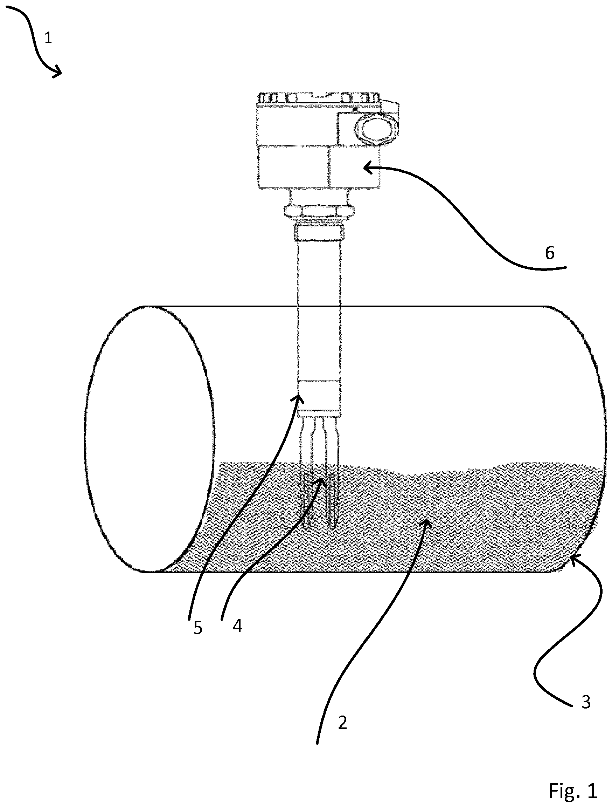

In Fig. 1 ist ein vibronischer Sensor 1 gezeigt. Dargestellt ist eine schwingfähige Einheit 4 in Form einer Schwinggabel, welche teilweise in ein Medium 2 eintaucht, welches sich in einem Behälter 3 befindet. Da diese Variante der schwingfähigen Einheit die am häufigsten verwendete ist, bezieht sich die gesamte nachfolgende Beschreibung ohne Beschränkung der Allgemeinheit auf eine Schwinggabel.

Die Schwinggabel wird mittels der elektromechanischen Wandlereinheit 5, welche mit dem Anregesignal beaufschlagt wird, zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalauswertung und/oder - speisung erfolgt.

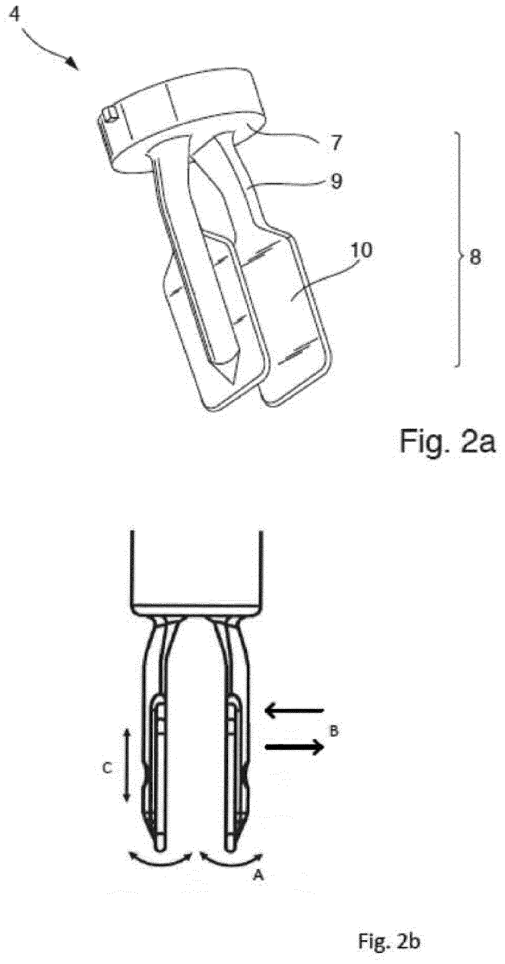

In Fig. 2a ist eine schematische Skizze einer Schwinggabel, wie Sie für den LIQUIPHANT eingesetzt wird, gezeigt. Zu sehen ist die Membran 7, und das damit verbundene Schwingelement 8. Das Schwingelement weist zwei Schwingstäbe 9 (nur eine sichtbar markiert) auf, an welchen endseitig jeweils ein Paddel 10 angeformt ist. Im Betrieb führt die Schwinggabel 4 Schwingungsbewegungen entsprechend der Schwingungsmode, mit welcher sie angeregt wird, aus. Wie diese Bewegungen aussehen ist schematisch in Fig. 2b gezeigt. Dort ist eine Schwinggabel 4 in einer gegenüber Fig. 2a um 90° gedrehten Ansicht gezeigt. Die Pfeile deuten jeweils für die Grundschwingungsmode A, sowie für die erste B und zweite C höhere Schwingungsmode die jeweils wesentlichen Bewegungsrichtungen der Schwinggabel 4 an. Jeder der beiden Schwingstäbe 9 verhält sich im Wesentlichen wie der in der Beschreibungseinleitung genannte Biegeschwinger. In der Grundschwingungsmode schwingen die beiden Schwingstäbe 9 gegenphasig zueinander.

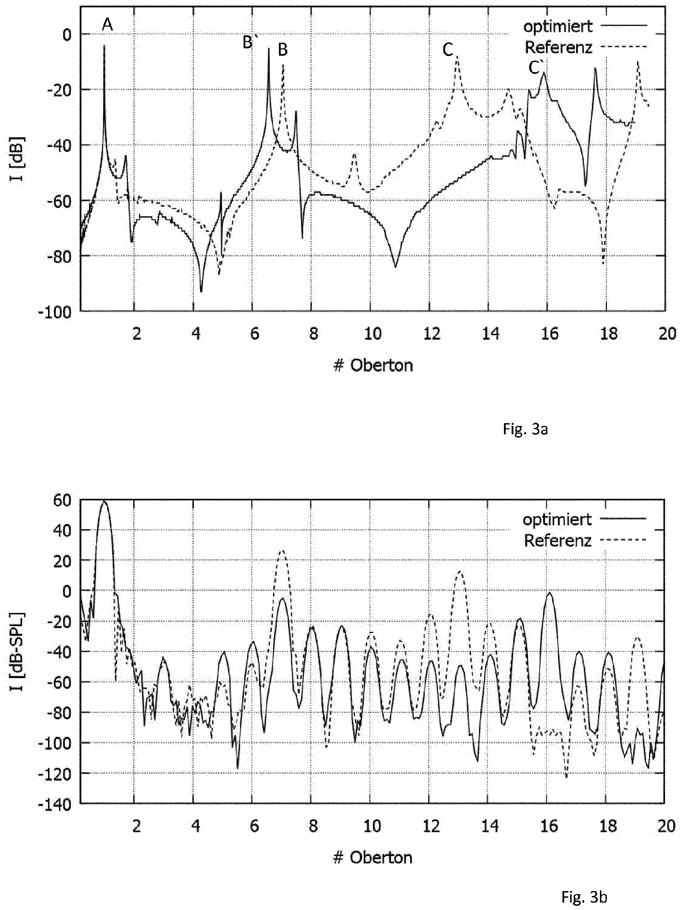

In Fig. 3a) sind schließlich zwei Schwingungsspektren gezeigt, eines für eine herkömmliche Schwinggabel im LIQUIPHANT, und das zweite für eine erfindungsgemäße Schwinggabel. Die Kurven sind jeweils auf ganzzahlige Vielfache der Grundfrequenz, welche der Grundschwingungsmode entspricht, normiert. Die gestrichelte Linie entspricht dem Schwingungsspektrum der Schwinggabel im LIQUIPHANT mit der Grundschwingungsmode A bei 1f₀, der ersten höheren Schwingungsmode B in der Nähe von 7f₀ und der zweiten angeregten Schwingungsmode in der Nähe von 13f₀. Dagegen liegt die erste höhere Schwingungsmode B' für eine erfindungsgemäße Schwinggabel (durchgezogene Linie) bei ca. 6.5f₀, und somit jeweils im Bereich zwischen zwei ganzzahligen Vielfachen der Grundfrequenz und wird vom Anregesignal nicht mehr angeregt. Die zweite höhere Schwingungsmode C' der erfindungsgemäßen Schwinggabel liegt bei knapp 16f₀, und somit im Bereich der Hörgrenze. Die Folge ist eine deutlich reduzierte Geräuschemission der Schwinggabel, wie es aus dem zu den Schwingungsspektren zugehörigen akustischen Spektren in Fig. 3b) ersichtlich wird. Die Abnahme des Schalldrucks für die erste höhere Schwingungsmode B beträgt 32dB(SPL) und die für die zweite höhere Schwingungsmode 62dB(SPL).

Zur Herstellung einer erfindungsgemäßen optimierten Schwinggabel wurde die Masseverteilung, die Steifigkeit sowie die Geometrie mittels der Finite Elemente Methode angepasst. Dazu wurde zur Verschiebung der ersten höheren Schwingungsmode B die Masseverteilung auf den Paddeln variiert. Für die zweite höhere Schwingungsmode C dagegen wurden die Radien im Übergansbereich zwischen der Gabelwurzel und der Membran variiert, so dass sich die Steifigkeit sowie die Biegelinie der Membran, bzw. den Kontaktbereich zwischen dem Schwingstab und der Membran, verändern.

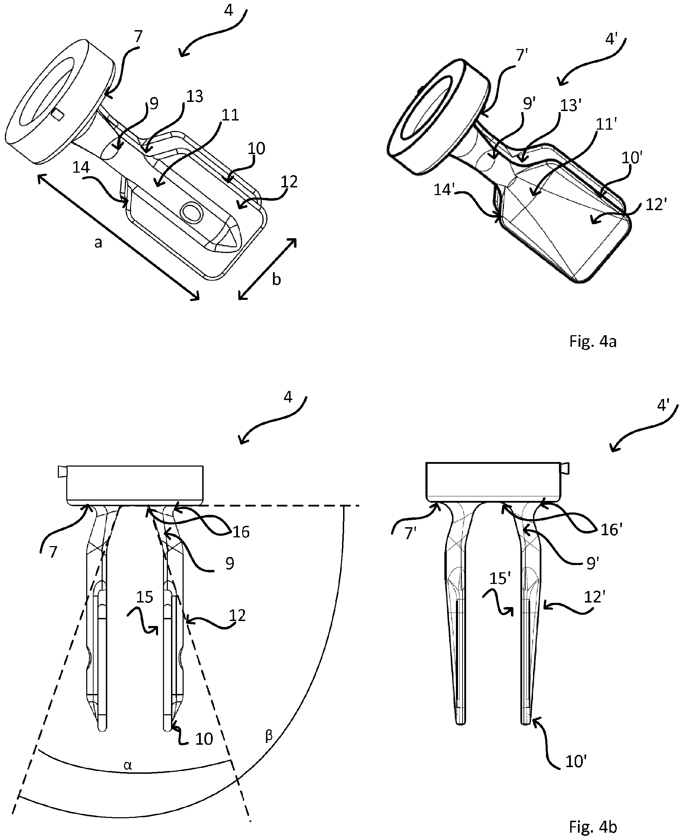

Zur Veranschaulichung sind in Fig. 4 eine herkömmliche LIQUIPHANT Schwinggabel 4 und eine erfindungsgemäße Schwinggabel 4' gegenüber gestellt. Die Abbildungen, welche jeweils links angeordnet sind, beziehen sich dabei auf die Schwinggabel im LIQUIPHANT, diejenigen auf der rechten Seite auf eine erfindungsgemäße Ausgestaltung. Ferner sind die Bezugszeichen, welche sich auf die erfindungsgemäße Ausgestaltung beziehen, mit Strichen versehen. Es sei darauf verwiesen, dass es sich bei der hier gezeigten Konstruktion nur um ein mögliches Beispiel für eine erfindungsgemäße Schwinggabel handelt. Es sind noch zahllose weitere Ausgestaltungen für eine Schwinggabel denkbar, welche ebenfalls unter die vorliegende Erfindung fallen.

Es finden sich links jeweils Darstellungen der Schwinggabel im LIQUIPHANT und rechts eine analogen Darstellung einer erfindungsgemäßen Schwinggabel. Prozessbedingt wurden einige Maße der herkömmlichen Schwinggabel im LIQUIPHANT beibehalten. Dies betrifft zum einen die Länge von der Membran bis zum Ende der Paddel a mit 40mm, sowie die Breite der Paddel b mit 17,2mm. Insbesondere wurde darauf geachtet, dass sich der Schaltpunkt der Schwinggabel, entsprechend einer Frequenzverschiebung bei einer bestimmten Eintauchtiefe ins Medium, durch die Änderungen der Masseverteilung und Steifigkeit nicht ändert. Es versteht sich jedoch von selbst, dass hier auch andere Maße für die schwingfähige Einheit 8 verwendet und insbesondere andere Schaltpunkte definiert werden können.

In Fig. 4a) ist eine perspektivische Ansicht beider Schwinggabeln 4, 4' dargestellt. Der Einfachheit bezieht sich die folgende Beschreibung jeweils nur für eines der beiden Paddel 10,10'. Das jeweils andere Paddel 10,10' ist analog ausgestaltet. Während für die herkömmliche Schwinggabel 4 (links) der Schwingstab 9 sich entlang des Paddels 10 als Rippe 11 fortsetzt, welche entlang der Paddeloberfläche hervorsteht, verschmelzen für die erfindungsgemäße Schwinggabel 4' (rechts) das Paddel 10' und die Rippe 11' zu einer homogenen Einheit mit gewölbter Oberfläche, in welchen der Schwingstab 9' homogen übergeht. Die äußere Paddeloberfläche 12 der Schwinggabel 4 im LIQUIPHANT ist planar mit aufgesetzter Rippe 11, während für die erfindungsgemäße Schwinggabel 4' die äußere Oberfläche des Paddels 12' gewölbt und mit der Rippe 11' verschmolzen ist und somit eine homogene Einheit bildet. Durch diese Verschmelzung ändert sich auch der Radius 13 bzw. 13' am Übergang zwischen Schwingstab 9, 9' und Paddel 10,10', sowie die die obere Berandungskontur des Paddels 14, bzw. 14', welche für die erfindungsgemäße schwingfähige Einheit 4' abgerundet wurde.

In Fig. 4b) sind die schwingfähigen Einheiten 4, 4' in einer Seitenansicht gezeigt. In dieser Darstellung lässt sich noch besser der Unterschied für die äußere Oberfläche 12, 12' der Paddel 10,10', welche für die Schwinggabel im LIQUIPHANT 4 planar ist, und für die erfindungsgemäße Schwinggabel 4' gewölbt. In der hier gezeigten Ausgestaltung ist die innere Oberfläche der Paddel 15,15' für beide Schwinggabeln planar. Es versteht sich jedoch von selbst, dass auch die innere Oberfläche des Paddels 15' gewölbt sein kann.

Ein weiterer Unterschied zwischen den beiden Schwinggabeln 4, 4' betrifft die Winkelstellung der Schwingstäbe 9,9' an der Verbindungsstelle 16, 16' zur Membran 7,7'. Diese Veränderung kann am besten durch die Angabe der Winkel α und β angegeben werden, welche für die Schwinggabel 4 im LIQUIPHANT eingezeichnet sind. Diese Winkel betragen für die Schwinggabel 4 im LIQUIPHANT α=35,5°, und β=107,7° während sich für erfindungsgemäße Schwinggabel 4' die analogen Winkel zu α'=29,9° und β=104,9° ergeben.

Insgesamt bewirkt für die gezeigten Beispiel einer erfindungsgemäßen schwingfähigen Einheit 4' die Anpassung der Masseverteilung im Bereich der Paddel 10', welche sich durch die Verschmelzung der Rippe 11' mit der Paddeloberfläche, sowie dessen Wölbung ergibt, die Verschiebung der ersten höheren Harmonischen B. Die Verschiebung der zweiten höheren Harmonischen C dagegen ergibt sich aus der Anpassung der Radien im Bereich der Verbindungsstelle 16, 16' zur Membran und die veränderte Winkelstellung.

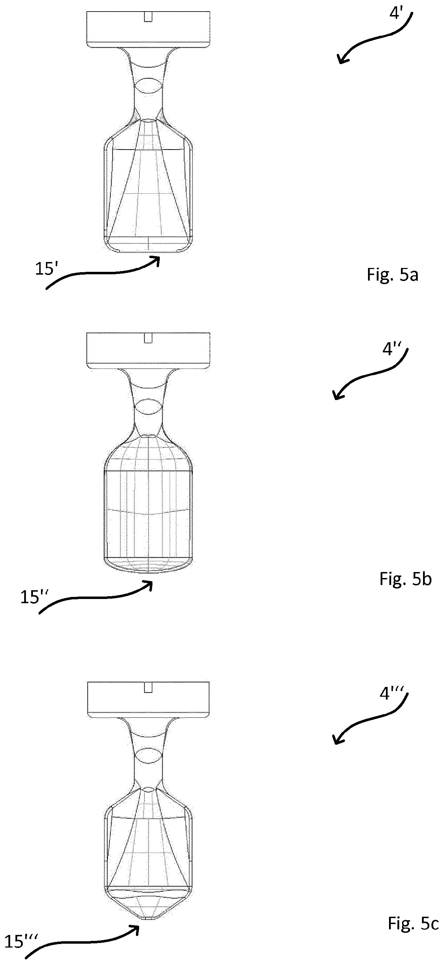

Die Fig. 5 zeigt schließlich zwei weitere Varianten einer erfindungsgemäßen Schwinggabel. Wieder handelt es sich hierbei um einzelne herausgegriffene Beispiele, wobei es sich von selbst versteht, dass neben diesen gezeigten Ausgestaltungen noch unzählige weitere Varianten denkbar sind, welche alle ebenfalls unter die Erfindung fallen. Dabei zeigt Fig. 5a) eine Seitenansicht einer erfindungsgemäßen Schwinggabel 4' wie in Fig. 4 gezeigt. Die untere Berandungskontur, bzw. der Endbereich der Paddel 16' ist bei dieser Variante gerade ausgestaltet. Dagegen zeigt Fig. 5b) eine mögliche Ausgestaltung einer erfindungsgemäßen Schwinggabel 4" mit abgerundeter untere Berandungskontur 15", und Fig. 5c) eine erfindungsgemäße Schwinggabel 4''', welche im Endbereich des Paddels 15''' mit einer Spitze abschließt. Auch bei diesen Beispielen wurden prozessbedingt die Maße a und b beibehalten. Diese unterschiedlichen Geometrien für die Endbereiche 15', 15", 15" der Paddel sind durch die sich ergebenden Unterschiede im Abtropfverhalten motiviert. Abgerundete Berandungskonturen, 5" oder solche mit einer Spitze 15''' weisen sich diesbezüglich vorteilhaft aus. Auf der anderen Seite ändert sich durch die Änderung der Geometrie der Endbereiche 15", 15''' der Paddel auch die Sensitivität der Schwinggabel, insbesondere der Schaltpunkt, so dass je nach Wahl des Endbereichs 15',15",15''' die Masseverteilung und Steifigkeit erneu angepasst werden müssen.

### Bezugszeichenliste

- 1: Vibronischer Sensor
- 2: Medium
- 3: Behälter
- 4: Schwingfähige Einheit in Form einer Schwinggabel
- 5: Elektromechanische Wandlereinheit
- 6: Elektronikeinheit
- 7: Membran
- 8: Schwingelement
- 9: Schwingschwingstab
- 10: Endseitig angeformtes Paddel
- 11: Rippe
- 12: Äußere Paddeloberfläche der Schwinggabel
- 13: Radius am Übergang zwischen Schwingstab und Paddel
- 14: obere Berandungskontur des Paddels
- 15: untere Berandungskontur des Paddels, bzw. Endbereich
- 16: Winkelstellung der Schwingstäbe an der Verbindungsstelle zur Membran

- A: Grundschwingungsmode einer Schwinggabel
- B: Erste höhere Schwingungsmode einer Schwinggabel
- C: Zweite höhere Schwingungsmode einer Schwinggabel

## Patentansprüche

1. Vorrichtung zur Bestimmung und/oder Überwachung mindestens einer Prozessgröße eines Mediums (2) in einem Behälter (3) mit zumindest
- einer schwingfähigen Einheit (4), umfassend zumindest eine Membran (7), und zumindest ein Schwingelement (8),
- einer Antriebs-/Empfangseinheit (5), welche dazu ausgestaltet ist, die mechanisch schwingfähige Einheit (4) mittels eines elektrischen Anregesignals einstellbarer Anregefrequenz zu Schwingungen im der Anregefrequenz entsprechenden Schwingungsmodus anzuregen und die mechanischen Schwingungen von der schwingfähigen Einheit (4) zu empfangen und in ein elektrisches Empfangssignal umzuwandeln,
wobei es sich bei dem Schwingungsmodus um eine Grundschwingungsmode und bei der Anregefrequenz um die der Grundschwingungsmode entsprechende Grundresonanzfrequenz handelt und
- einer Elektronikeinheit (6), welche dazu ausgestaltet ist, ausgehend vom Empfangssignal das Anregesignal zu erzeugen, und aus dem Empfangssignal die zumindest eine Prozessgröße zu ermitteln,
wobei die Membran (7) mit der Antriebs-/Empfangseinheit (5) verbunden ist,
wobei das Schwingelement (8) die Form eines Schwingstabes (9) aufweist, an welchem endseitig ein Paddel (10) angeformt ist, und welches Schwingelement (8) im dem Paddel (10) abgewandten Endbereich an der Membran (7) befestigt ist,
**gekennzeichnet dadurch,**
**dass** die Massenverteilung, Steifigkeit und Geometrie der schwingfähigen Einheit (4) derart gewählt sind, dass die Frequenz zumindest einer in Bezug auf die Grundschwingungsmode höheren Schwingungsmode (B') der schwingfähigen Einheit (4) im Bereich zwischen zwei benachbarten ganzzahligen Vielfachen der Grundresonanzfrequenz liegt.

2. Vorrichtung nach Anspruch 1,
**gekennzeichnet dadurch,**
**dass** die schwingfähige Einheit (4) eine Schwinggabel ist.

3. Vorrichtung nach Anspruch 1,
**gekennzeichnet dadurch,**
**dass** das Paddel (10) aus einem vorgebbaren Material mit einer Dichte (p) besteht, mit einer vorgebbaren Oberfläche (A_{P}) und einer vorgebbaren Dicke (d), und dass das Produkt aus Dicke (d) und Dichte (p) möglichst klein ist, und dass die Oberfläche (A_{P}) des Paddels (10) möglichst groß ist.

4. Vorrichtung nach Anspruch 1 oder 2,
**gekennzeichnet dadurch,**
**dass** die Oberfläche (A_{P}) des Paddels (10) und/oder des Schwingstabes (9) (A_{S}) gewölbt sind.

5. Vorrichtung nach zumindest einem der vorhergehenden Ansprüche,
**gekennzeichnet dadurch,**
**dass** die Kanten des Paddels (10) abgerundet sind.

6. Vorrichtung nach zumindest einem der vorhergehenden Ansprüche,
**gekennzeichnet dadurch,**
**dass** die Breite des Paddels (b) (10) im mittleren Bereich bezogen auf die Längsachse (L) parallel zum Schwingstab (9) am größten ist, und wobei das Paddel (10) im Endbereich auf der der Membran (7) abgewandten Seite unter einem Winkel zwischen 20° und 55° zur Längsachse des Paddels (10) abgeschrägt ist.

7. Vorrichtung nach Anspruch 5,
**gekennzeichnet dadurch,**
**dass** das Paddel (10) mit einer Spitze abschließt.

8. Vorrichtung nach zumindest einem der vorhergehenden Ansprüche,
**gekennzeichnet dadurch,**
**dass** der Schwingstab (9) eine runde Querschnittsfläche senkrecht zur Längsachse (L) aufweist.

9. Vorrichtung nach zumindest einem der vorhergehenden Ansprüche,
**gekennzeichnet dadurch,**
**dass** die Dicke des Paddels (10) im Endbereich geringer ist als im mittleren Bereich.

10. Vorrichtung nach zumindest einem der vorhergehenden Ansprüche,
**gekennzeichnet dadurch,**
**dass** die zumindest eine Prozessgröße gegeben ist durch einen vorbestimmten Füllstand des Mediums, oder durch die Dichte des Mediums oder durch die Viskosität des Mediums.

11. Vorrichtung nach zumindest einem der vorhergehenden Ansprüche,
**gekennzeichnet dadurch,**
**dass** die schwingfähige Einheit (4) aus einem Metall, einer Keramik oder einem Kunststoff besteht.

12. Verfahren zur Herstellung einer Vorrichtung nach Anspruch 1,
**gekennzeichnet dadurch,**
**dass** zur Einstellung der Lage der Frequenz mindestens einer in Bezug auf die der Anregefrequenz entsprechenden Grundschwingungsmode höheren Schwingungsmode (B') der mechanisch schwingfähigen Einheit (4) die Massenverteilung, Steifigkeit und/oder Geometrie der schwingfähigen Einheit (4) mittels einer Finite-Elemente Methode variiert wird, so dass die Frequenz der höheren Schwingungsmode im Bereich zwischen zwei benachbarten ganzzahligen Vielfachen der Anregefrequenz liegt.

13. Verfahren nach Anspruch 11,
**gekennzeichnet dadurch,**
**dass** zur Einstellung der Lage der Frequenz der ersten höheren Schwingungsmode die Masseverteilung im mittleren Bereich des Paddels (10) variiert wird.

14. Verfahren nach Anspruch 11 oder 12,
**gekennzeichnet dadurch,**
**dass** zur Einstellung der Lage der Frequenz Z einer höheren Schwingungsmode, insbesondere der zweiten höheren Schwingungsmode, die Steifigkeit im Bereich der Membran (7) und die Verbindung zwischen Membran (7) und Schwingstab (9) variiert wird.

## Claims

1. Apparatus designed to determine and/or monitor at least one process variable of a medium (2) in a vessel (3) with at least
- a unit which is capable of vibrating (4), which comprises at least a membrane (7) and at least a vibration element (8),
- a drive/reception unit (5), which is designed to cause the unit, which is capable of vibrating mechanically (4), to vibrate in the vibration mode which corresponds to the vibration frequency by means of an electrical vibration signal of adjustable frequency, and to receive the mechanical vibrations from the unit which is capable of vibrating (4) and to convert them to an electrical reception signal,
wherein the vibration mode is a basic vibration mode and the excitation frequency is the basic resonance frequency corresponding to the basic vibration mode, and
- an electronic unit (6), which is designed to generate the excitation signal from the reception signal and to determine the at least one process variable from the reception signal,
wherein the membrane (7) is connected to the drive/reception unit (5),
wherein the vibration element (8) has the shape of a vibration rod (9) on which a paddle (10) is formed at one end, and wherein said vibration element (8) is secured to the membrane (7) in the end area facing away from the paddle (10),
**characterized**
**in that** the mass distribution, the rigidity and the geometry of the unit which is capable of vibrating (4) are selected in such a way that the frequency of at least a vibration mode (B') of the unit which is capable of vibrating (4) that is higher in relation to the basic vibration mode is in the range between two neighboring whole-number multiples of the basic resonance frequency.

2. Apparatus as claimed in Claim 1,
**characterized**
**in that** the unit which is capable of vibrating (4) is a tuning fork.

3. Apparatus as claimed in Claim 1,
**characterized**
**in that** the paddle (10) is made from a predefinable material with a density (p), with a predefinable surface (Aₚ) and a predefinable thickness (d), and in that the product of the thickness (d) and density (p) is as small as possible, and in that the surface (Aₚ) of the paddle (10) is as large as possible.

4. Apparatus as claimed in Claim 1 or 2,
**characterized**
**in that** the surface (Aₚ) of the paddle (10) and/or of the vibration rod (9) (A_{S}) is curved.

5. Apparatus as claimed in at least one of the previous claims,
**characterized**
**in that** the edges of the paddle (10) are rounded.

6. Apparatus as claimed in at least one of the previous claims,
**characterized**
**in that** the width (b) of the paddle (10) is largest in the central section in relation to the longitudinal axis (L) parallel to the vibration rod (9), and wherein the paddle (10) is chamfered in the end section on the side facing away from the membrane (7) at an angle between 20° and 55° in relation to the longitudinal axis of the paddle (10).

7. Apparatus as claimed in Claim 5,
**characterized**
**in that** the paddle (10) finishes in a point.

8. Apparatus as claimed in at least one of the previous claims,
**characterized**
**in that** the vibration rod (9) has a round cross-section surface perpendicular to the longitudinal axis (L).

9. Apparatus as claimed in at least one of the previous claims,
**characterized**
**in that** the thickness of the paddle (10) is lower in the end section than in the center section.

10. Apparatus as claimed in at least one of the previous claims,
**characterized**
**in that** the at least one process variable is given by a predefined level of the medium, or by the density of the medium or by the viscosity of the medium.

11. Apparatus as claimed in at least one of the previous claims,
**characterized**
**in that** the unit which is capable of vibrating (4) is made from a metal, a ceramic or a plastic material.

12. Procedure to manufacture an apparatus as claimed in Claim 1
**characterized**
**in that** the mass distribution, the rigidity and/or the geometry of the unit which is capable of vibrating (4) is varied using a finite element method in order to set the position of the frequency of at least a vibration mode (B') which is higher in relation to the basic vibration mode corresponding to the excitation frequency of the unit which is capable of vibrating mechanically (4) such that the frequency of the higher vibration mode is in the range between two neighboring whole-number multiples of the excitation frequency.

13. Procedure as claimed in Claim 11,
**characterized**
**in that** the mass distribution in the central area of the paddle (10) is varied in order to set the position of the frequency of the first higher vibration mode.

14. Procedure as claimed in Claim 11 or 12,
**characterized**
**in that** the rigidity in the area of the membrane (7) and the connection between the membrane (7) and the vibration rod (9) is varied to regulate the position of the frequency of a higher vibration mode, particularly of the second higher vibration mode.

## Revendications

1. Dispositif destiné à la détermination et/ou à la surveillance d'au moins une grandeur de process d'un produit (2) dans un réservoir (3) avec au moins
- une unité apte à vibrer (4), laquelle comprend au moins une membrane (7) et au moins un élément vibrant (8),
- une unité d'entraînement/de réception (5), laquelle est conçue pour exciter l'unité apte à vibrer mécaniquement (4) au moyen d'un signal d'excitation électrique de fréquence d'excitation réglable en vibrations dans le mode de vibration correspondant à la fréquence d'excitation, et pour recevoir les vibrations mécaniques de l'unité apte à vibrer (4) et les convertir en un signal de réception électrique,
le mode de vibration étant un mode de vibration fondamental et la fréquence d'excitation étant la fréquence de résonance fondamentale correspondant au mode de vibration fondamental,
et
- une unité électronique (6), laquelle est conçue pour générer le signal d'excitation à partir du signal de réception, et pour déterminer l'au moins une grandeur de process à partir du signal de réception,
la membrane (7) étant reliée avec l'unité d'entraînement/de réception (5), l'élément vibrant (8) ayant la forme d'une tige vibrante (9), sur laquelle une palette (10) est formée à l'extrémité, et lequel élément vibrant (8) est fixé à la membrane (7) dans la zone d'extrémité opposée à la palette (10),
**caractérisé**
**en ce que** la répartition de masse, la rigidité et la géométrie de l'unité apte à vibrer (4) sont choisies de telle sorte que la fréquence d'au moins un mode de vibration (B') de l'unité apte à vibrer (4), lequel mode est plus élevé par rapport au mode de vibration fondamental, se situe dans la plage comprise entre deux multiples entiers voisins de la fréquence de résonance fondamentale.

2. Dispositif selon la revendication 1,
**caractérisé**
**en ce que** l'unité apte à vibrer (4) est une fourche vibrante.

3. Dispositif selon la revendication 1,
**caractérisé**
**en ce que** la palette (10) est constituée d'un matériau pouvant être prédéfini avec une densité (p), avec une surface (Aₚ) pouvant être prédéfinie et une épaisseur (d) pouvant être prédéfinie, et **en ce que** le produit de l'épaisseur (d) et de la densité (p) est le plus petit possible, et **en ce que** la surface (Aₚ) de la palette (10) est la plus grande possible.

4. Dispositif selon la revendication 1 ou 2,
**caractérisé**
**en ce que** la surface (Aₚ) de la palette (10) et/ou de la tige vibrante (9) (A_{S}) est bombée.

5. Dispositif selon au moins l'une des revendications précédentes,
**caractérisé**
**en ce que** les bords de la palette (10) sont arrondis.

6. Dispositif selon au moins l'une des revendications précédentes,
**caractérisé**
**en ce que** la largeur (b) de la palette (10) est la plus grande dans la zone centrale par rapport à l'axe longitudinal (L) parallèle à la tige vibrante (9), et la palette (10) étant biseautée dans la zone d'extrémité sur le côté opposé à la membrane (7) selon un angle compris entre 20° et 55° par rapport à l'axe longitudinal de la palette (10).

7. Dispositif selon la revendication 5,
**caractérisé**
**en ce que** la palette (10) se termine par une pointe.

8. Dispositif selon au moins l'une des revendications précédentes,
**caractérisé**
**en ce que** la tige vibrante (9) présente une surface de section circulaire perpendiculaire à l'axe longitudinal (L).

9. Dispositif selon au moins l'une des revendications précédentes,
**caractérisé**
**en ce que** l'épaisseur de la palette (10) est plus faible dans la zone d'extrémité que dans la zone centrale.

10. Dispositif selon au moins l'une des revendications précédentes,
**caractérisé**
**en ce que** ladite au moins une grandeur de process est donnée par un niveau prédéfini du produit, ou par la densité du produit ou par la viscosité du produit.

11. Dispositif selon au moins l'une des revendications précédentes,
**caractérisé**
**en ce que** l'unité apte à vibrer (4) est constituée d'un métal, d'une céramique ou d'une matière plastique.

12. Procédé destiné à la fabrication d'un dispositif selon la revendication 1
**caractérisé**
**en ce que**, pour régler la position de la fréquence d'au moins un mode de vibration (B') plus élevé par rapport au mode de vibration fondamental correspondant à la fréquence d'excitation de l'unité apte à vibrer mécaniquement (4), on fait varier la répartition de masse, la rigidité et/ou la géométrie de l'unité apte à vibrer (4) au moyen d'une méthode par éléments finis, de sorte que la fréquence du mode de vibration plus élevé se situe dans la zone comprise entre deux multiples entiers voisins de la fréquence d'excitation.

13. Procédé selon la revendication 11,
**caractérisé**
**en ce que**, pour régler la position de la fréquence du premier mode de vibration supérieur, on fait varier la répartition de la masse dans la zone centrale de la palette (10).

14. Procédé selon la revendication 11 ou 12,
**caractérisé**
**en ce que**, pour régler la position de la fréquence d'un mode de vibration supérieur, notamment du deuxième mode de vibration supérieur, on fait varier la rigidité dans la zone de la membrane (7) et la liaison entre la membrane (7) et la tige vibrante (9).
